Europäisches Patentamt

European Patent Office

Office européen des brevets

(11) Veröffentlichungsnummer: **0 508 197 A2**

# EUROPÄISCHE PATENTANMELDUNG

(21) Anmeldenummer: **92104953.2**

(22) Anmeldetag: **23.03.92**

(51) Int. Cl.5: **F16L 3/10**

(30) Priorität: **11.04.91 DE 4111778**

(43) Veröffentlichungstag der Anmeldung:
**14.10.92 Patentblatt 92/42**

(84) Benannte Vertragsstaaten:
**AT BE CH DE DK ES FR GB GR IT LI LU MC NL PT SE**

(71) Anmelder: **Abel, Dietmar**
**Eichenstrasse 2**
**W-7176 Braunsbach-Zottishofen(DE)**

(72) Erfinder: **Abel, Dietmar**
**Eichenstrasse 2**
**W-7176 Braunsbach-Zottishofen(DE)**

(74) Vertreter: **Abel, Martin, Dipl.-Ing. et al**
**Patentanwälte Dipl.-Ing. R. Magenbauer,**
**Dipl.-Phys. Dr. O. Reimold, Dipl.-Phys. Dr. H.**
**Vetter, Dipl.-Ing. M. Abel, Hölderlinweg 58**
**W-7300 Esslingen(DE)**

(54) **Verfahren zur Montage eines Elastikteils an der Klemmseite des Bügels einer Rohrschelle sowie Vorrichtung zur Durchführung dieses Verfahrens.**

(57) Es wird ein Verfahren zur Montage eines leistenförmigen Elastikteiles (7) am Bügel (2) einer Rohrschelle vorgeschlagen. Hierzu wird auf einer geeigneten Vorrichtung zunächst das Elastikteil (7) in eine gekrümmte Montagegestalt verbracht, so daß seitlich angeordnete rippenförmige Haltevorsprünge nach radial außen ragen. Hernach werden die Haltevorsprünge (9,9') mittels Spreizelementen (24) auseinandergespreizt, worauf in den verbreiterten Zwischenraum (30) der zu bestückende Bügel (2) eingelegt wird. Jetzt werden die Spreizelemente (24,24') wieder entfernt, so daß die Haltevorsprünge (9,9') auf die Bügelränder (8) aufschnappen können. Es wird desweiteren eine Vorrichtung zur Durchführung dieses Verfahrens vorgeschlagen.

FIG. 2

EP 0 508 197 A2

Die Erfindung betrifft ein Verfahren zur Montage eines leistenförmigen, insbesondere aus Gummi bestehenden Elastikteils an der Klemmseite des Bügels einer Rohrschelle, wobei das Elastikteil zwei einander gegenüber beabstandete, im montierten Zustand den Bügel über eine Haltelänge randseitig umgreifende Haltevorsprünge besitzt. Die Erfindung betrifft ferner eine insbesondere zur Durchführung dieses Verfahrens geeignete Vorrichtung.

Rohrschellen werden im Bauwesen verwendet, um Rohre an Tragwänden oder Decken festzulegen. Im Gebrauchszustand stellen sie ein Ringgebilde dar, das ein betreffendes Rohr klemmend umschließt. Das Anbringen am Rohr ermöglichen eine oder zwei Trennstellen, die die Rohrschelle in einen oder zwei Bügel unterteilen und im Bereich derer die Rohrschelle mittels Klemmschrauben oder sonstigen Verbindungsmitteln schließbar ist. Über ein an wenigstens einem Bügel angeordnetes Befestigungsteil läßt sich die Rohrschelle an der Tragwand bzw. Decke festlegen.

Insbesondere um eine Schallübertragung zwischen den Rohren und den Rohrschellen zu verhindern, eine sonstige Isolation zu bewirken und/oder eine Beschädigung der zu klemmenden Rohre auszuschließen, werden die Bügel der Rohrschellen vor dem Gebrauch an ihrer Klemmseite mit einem leistenförmigen gummielastichen Elastikteil belegt. Dieses besitzt zu seiner Befestigung im Bereich beider Längsseiten im Querschnitt insbesondere klauenförmig ausgestaltete Haltevorsprünge, die sich in der Regel ununterbrochen über die gesamte Länge des Elastikteils erstrecken. Im montierten Zustand liegt das Elastikteil an der Klemmseite des Bügels an und umgreift mit seinen Haltevorsprüngen die beiden seitlichen Bügelränder. Beispiele für derartige Anordnungen gehen aus der DE-U1-84 19 768 und dem DE-GM 79 09 379 hervor.

Die Montage der Elastikteile auf den Bügeln der Rohrschellen erfolgt bisher rein manuell durch umständliches Aufknüpfen oder, wie in dem DE-GM 79 09 379 für den Fall relativ harten Materials vorgeschlagen, durch Aufschieben in Umfangsrichtung. Abgesehen davon, daß diese Tätigkeit, insbesondere bei Bügeln mit großer Bogenlänge, für eine Person sehr anstrengend und ermüdend ist, lassen sich damit auch keine hohen Montage-Stückzahlen erzielen, was insgesamt hohe Herstellungskosten zur Folge hat.

Es ist das Ziel der vorliegenden Erfindung, ein Verfahren der eingangs genannten Art zu schaffen, mit dem sich eine zeit- und personalsparendere sowie kostengünstigere Montage der Elastikteile durchführen läßt. Zugleich soll eine bevorzugt zur Durchführung dieses Verfahrens verwendbare Vorrichtung geschaffen werden.

Dieses Ziel wird bei einem Verfahren erreicht, das sich dadurch auszeichnet, daß das Elastikteil in eine zumindest annähernd der im montierten Zustand einzunehmenden Gestalt entsprechende gekrümmte Montagegestalt gebracht wird, daß anschließend die bei dieser Montagegestalt nach radial außen ragenden Haltevorsprünge mittels zweier Spreizelemente auseinandergespreizt werden, daß danach der Bügel mit der Klemmseite voraus in den durch das Aufspreizen verbreiterten Zwischenraum zwischen den über ihre gesamte Haltelänge auseinandergespreizten Haltevorsprüngen eingelegt wird, und daß schließlich die Haltevorsprünge von den Spreizelementen freigegeben werden, worauf selbige auf die Bügelränder aufschnappen können.

Anstelle eines umständlichen Aufknüpfens werden somit die Haltevorsprünge in einem Arbeitsgang über die gesamte vorgesehene Haltelänge so weit auseinandergespreizt, daß ein Rohrschellen-Bügel problemlos in den somit verbreiterten Zwischenraum einlegbar ist, wonach nur noch die Spreizelemente wieder zu entfernen sind, um die Haltevorsprünge auf die Bügeländer selbsttätig aufschnappen zu lassen.

Eine zur Durchführung dieses Verfahrens besonders geeignete Vorrichtung zeichnet sich dadurch aus, daß eine Unterlage vorhanden ist, an der das Elastikteil in einer Montagestellung derart anordenbar ist, daß es eine zumindest annähernd der im montierten Zustand einzunehmenden Gestalt entsprechende gekrümmte Montagegestalt mit nach radial außen ragenden Haltevorsprüngen einnimmt, daß zwei zwischen einer einander angenäherten Einführstellung und einer weiter voneinander entfernten Aufspreizungsstellung bewegbare Spreizelemente vorhanden sind, und daß Betätigungsmittel vorhanden sind, um die Spreizelemente bei eingenommener Einführstellung in den Zwischenraum zwischen den Haltevorsprüngen eines jeweiligen an der Unterlage angeordneten Elastikteils einzuführen, anschließend unter Auseinanderspreizung der Haltevorsprünge des Montagegestalt aufweisenden Elastikteils in die Aufspreizstellung zu verbringen und danach, bei mit der Klemmseite voraus in den verbreiterten Zwischenraum eingelegtem Bügel, von den Haltevorsprüngen zu entfernen.

Vorteilhafte Weiterbildungen der Erfindung sind in den Unteransprüchen angeführt.

Nachfolgend wird die Erfindung anhand der beigefügten Zeichnung näher erläutert. In dieser zeigen:

Fig. 1:     eine beispielhafte, aus zwei halbringförmigen Bügeln bestehende Rohrschelle mit auf den beiden Bügeln montierten Elastikteilen,

Fig. 2:     eine erste Bauform der erfindungsgemässen Vorrichtung in perspektivischer Darstellung, stark schematisiert und vereinfacht,

Fig. 3 bis 9: bei einem bevorzugten Verfahrensablauf durchlaufene Verfahrensschritte, unter Verwendung der Vorrichtung nach Figur 2, ebenfalls weitgehend schematisiert und unter Weglassung der Details, und

Fig. 10: alternative Verfahrensschritte bei einem weiteren vorteilhaften Verfahrensablauf in Draufsicht.

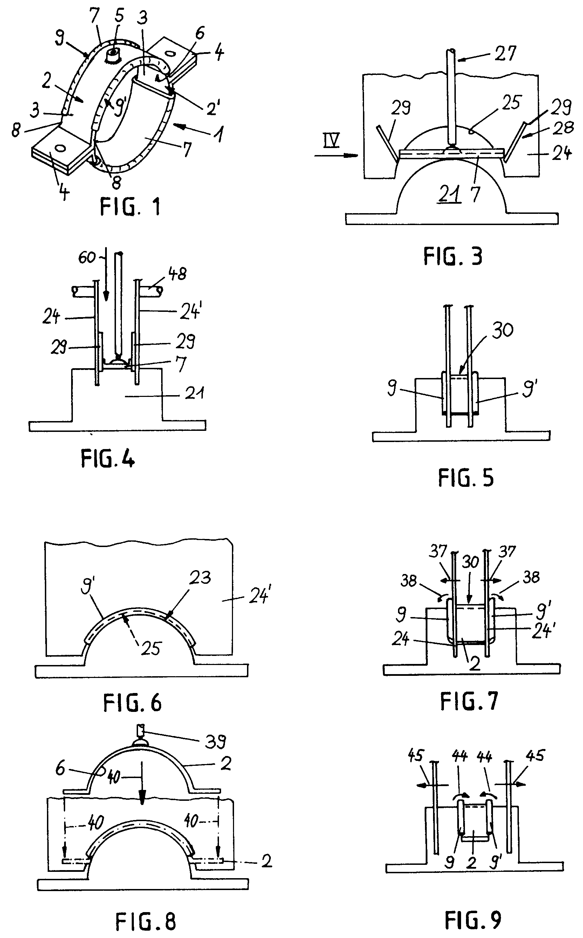

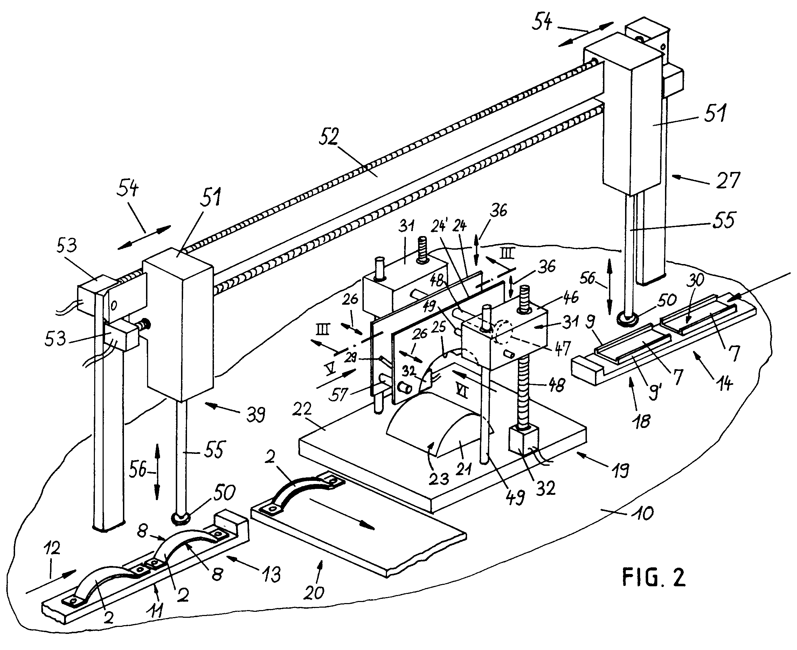

In Figur 1 ist zunächst eine fertig montierte Rohrschelle 1 gezeigt. Sie umfaßt zwei Bügel 2,2', die jeweils einen mittleren, bogenförmig nach Art einer Ringhälfte gekrümmten Klemmabschnitt 3 mit endseitig angeformten abgewinkelten Befestigungslaschen 4 aufweisen. Letztere ermöglichen das Verbinden der beiden Bügel 2,2' mittels Schrauben oder dergleichen Verbindungselementen, so daß die Klemmabschnitte 3 wie abgebildet eine Ringstruktur bilden, mit der ein hindurchgestecktes Rohr festklemmbar ist. An einem der Bügel 2 ist noch ein Befestigungsteil 5 zu erkennen, über das die Rohrschelle 1 an einer nicht dargestellten Tragwand, z.B. der Wand eines Gebäudes, befestigt werden kann. Die Bügel 2,2' bestehen aus Bandmaterial.

An der die Klemmseite 6 bildenden Innenseite jedes Bügels 2,2', bzw. genauer: an der nach radial innen weisenden Seite der Klemmabschnitte 3, ist jeweils ein leistenförmig ausgebildetes Elastikteil 7 angeordnet. Es besteht beim Ausführungsbeispiel aus Gummi und ist daher vorzugsweise insgesamt elastisch biegbar oder flexibel. Allerdings kann es auch lediglich im Bereich der noch zu erläuternden Haltevorsprünge 9,9' nachgiebig sein. Es kann bei Bedarf Durchbrechungen aufweisen, ist jedoch beim Ausführungsbeispiel als ununterbrochener Bandkörper ausgebildet. Bevorzugt dient es dem Verhindern einer metallischen Verbindung zwischen der Rohrschelle 1 und einem festzulegenden Rohr, so daß z.B. die Schallübertragung verhindert wird.

Jedes Elastikteil 7 besitzt an seinen beiden Längsseiten einen Haltevorsprung 9,9', der sich vorzugsweise ununterbrochen in Längsrichtung des Elastikteils 7 zweckmäßigerweise entlang dessen gesamter Länge erstreckt. Ein jeweiliger Haltevorsprung 9,9' kann über seine Länge auch einmal oder mehrmals unterbrochen sein , so daß er sich aus mehreren Einzelvorsprüngen zusammensetzt, zwischen denen sich Zwischenräume befinden können. Im montierten Zustand gemäß Fig. 1 gesehen ragen die Haltevorsprünge nach radial außen und umgreifen den jeweils zugeordneten seitlichen Bügelrand 8 im Bereich des Klemmabschnittes 3, wodurch das jeweilige Elastikteil am zugeordneten Bügel lösbar fixiert ist. Die Haltelänge, entlang derer der Bügelrand 8 umgriffen wird, ist vorzugsweise etwas geringer als die Bogenlänge des jeweils zugeordneten Klemmabschnittes 3.

Die Elastikteile 7 erhält man zweckmäßigerweise durch Ablängen profilierter Gummibänder auf die für einen jeweiligen Rohrschellentyp erforderliche Länge.

Zur Montage der Elastikteile 7 auf den Rohrschellen-Bügeln 2,2' ist eine in Fig. 2 abgebildete Vorrichtung vorgesehen. Sie erlaubt einen weitestgehend automatisierten Montageprozess.

Man erkennt in Fig. 2 zunächst einen z.B. von einem Tisch gebildeten Untergrund 10. Auf ihm ist linker Hand eine Zuführeinrichtung 11 angeordnet, auf der gemäß Pfeil 12 Bügel 2 aufeinanderfolgend zu einer Bügel-Entnahmestation 13 transportiert werden. Der Aufbau der Zuführeinrichtung 11 ist beliebiger Art, es kann sich z.B. um einen Rollenförderer handeln.

Auf der entgegengesetzten Vorrichtungsseite ist eine zweite Zuführeinrichtung 14 angeordnet, über die in entsprechender Weise nacheinander auf das erforderliche Maß bereits zugeschnittene Elastikteile 7 zu einer Elastikteil-Entnahmestation 18 angeliefert werden. Zwischen den beiden Zuführeinrichtungen 11,14 ist die eigentliche Montageeinrichtung 19 sowie eine Abfördereinrichtung 20 zum Abfördern fertig montierter Bügel 2 angeordnet.

Die Montageeinrichtung 19 umfaßt eine praktisch als Schablone wirkende Unterlage 21, die beim Ausführungsbeispiel auf einer Tragplatte 22 angeordnet ist. Sie hat die Gestalt eines Zylinderabschnittes mit nach oben gewölbter Mantelfläche 23. Es kann sich z.B. um eine Zylinderhälfte oder ein Rohrstück handeln. Die Unterlage 21 kann auch von einer beliebigen anderen gekrümmten Fläche gebildet sein. Auf der Unterlage 21 bzw. der Mantelfläche 23 sind die Elastikteile 7 nacheinander in einer in Fig. 6 verdeutlichten Montagestellung derart anordbar, daß sie eine zumindest annähernd der im montierten Zustand gemäß Fig. 1 einzunehmenden Gestalt entsprechende gekrümmte Montagegestalt mit bezüglich der Krümmungsachse nach radial außen ragenden Haltevorsprüngen 9,9' einnehmen. Die Krümmung der Unterlage 21 ist auf den Radius des jeweils mit einem Elastikteil 7 zu versehenden Bügels 2,2' abgestimmt. Je nach Bügelgröße bzw. -radius verwendet man zweckmäßigerweise verschiedene Unterlagen 21 mit entsprechend angepaßten Krümmungsradien.

Die Montageeinrichtung 19 umfaßt desweiteren zwei in der in Fig. 2 abgebildeten Ausgangsposition der Mantelfläche 23 gegenüberliegend oberhalb der Unterlage 21 angeordnete Spreizelemente 24,24'. Sie sind beim Ausführungsbeispiel im wesentlichen plattenförmig ausgebildet, wobei die beiden Plattenebenen parallel zueinander und in Vertikalrichtung verlaufen. Jedes Spreizelement 24,24' besitzt an der der Unterlage 21 zugewandten Seite eine entsprechend der Krümmung eines in Montagestellung befindlichen Elastikteils konturierte Spreizpartie 25, die zweckmäßigerweise vom entsprechend konturierten Rand des jeweiligen plattenförmigen Spreizelementes 24,24' gebildet ist.

Die Spreizelemente 24,24' sind zwischen einer einander angenäherten Einführstellung (Fig. 5) und einer bezüglich dieser weiter voneinander entfernten Aufspreizstellung (Fig. 7) relativ zueinander bewegbar. Die Bewegungsabläufe der beiden Spreizelemente 24,24' laufen zweckmäßigerweise bezüglich einer zwischen ihnen verlaufenden gedachten parallelen Mittelebene spiegelsymetrisch ab, so daß ein synchroner Ablauf gewährleistet ist, obwohl bei Bedarf auch universelle Bewegungsabläufe möglich sind. Die Bewegungsrichtungen, die parallel zur Längsachse der Unterlage 21 und beim Ausführungsbeispiel rechtwinkelig zu den Plattenebenen gerichtet sind, werden in Fig. 2 durch die Doppelpfeile 26 verdeutlicht.

Der weitere bevorzugte Aufbau der Vorrichtung wird nachfolgend unter Einbeziehung des bevorzugten Verfahrensablaufes näher erläutert.

Als erster Verfahrensschritt wird das in der Elastikteil-Entnahmestation 18 befindliche Elastikteil 7 von einer ersten Handhabungseinrichtung 27 aufgenommen und derart zentriert auf der Unterlage 21 abgelegt, daß die Längsmitte mit dem Scheitel der Unterlage 21 zusammenfällt. Diese Situation ist in Fig. 3 angedeutet, die eine Schnittdarstellung analog der Schnittlinie III - III aus Fig. 2 zeigt. Das Elastikteil 7 hat hier eine im wesentlichen noch lineare Gestalt und seine Längsachse ist in Umfangsrichtung bzw. tangential zu der Mantelfläche 23 ausgerichtet.

Um die Positionierung auf der Unterlage 21 zu unterstützen, ist vorzugsweise eine Führungseinrichtung 28 vorgesehen, die beim Ausführungsbeispiel an beiden Spreizelementen 24,24' angeordnete Bestandteile aufweist. Wie die Fig. 4, eine Vorderansicht gemäß Pfeil IV aus Fig. 3, verdeutlicht, umfaßt die Führungseinrichtung 28 beim Ausführungsbeispiel vier Führungsleisten 29, die jeweils paarweise gegenüberliegend an den einander zugewandten Innenseiten der Spreizelemente 24,24' angeordnet sind. In Seitenansicht gemäß Fig. 3 gesehen, laufen die Führungsleisten 29 eines jeweiligen Spreizelementes von oben nach unten schräg aufeinander zu, wobei sie an ihrem unteren Endbereich, der sich im Bereich der Spreizpartie 25 befindet, in etwa der Länge der Elastikteile 7 entsprechend beabstandet sind.

Zum Ablegen eines Elastikteils auf der Unterlage 21 werden demgemäß die Spreizelemente 24,24' zunächst auf einen Abstand gebracht, der etwa der Außenbreite der Elastikteile 7 entspricht bzw. geringfügig größer ist. Zudem werden die Spreizelemente auf noch zu erläuternde Art und Weise in einer Höhenlage positioniert, so daß die Unterkante der Führungsleisten 29 in etwa auf der Höhe des Scheitels der Unterlage 21 zu liegen kommt. Bei diesen in den Fig. 3 und 4 dargestellten Gegebenheiten wird sodann das jeweilige Elastikteil 7 von oben her gemäß Pfeil 60 zwischen den Spreizelementen 24,24' hindurchgeführt, wobei es durch Abgleiten an den Führungsleisten 29 in die gewünschte Position geleitet wird. Die Dicke der Führungsleisten 29 ist so gewählt, daß die Spreizelemente 24,24' an der Einnahme ihrer Einführstellung nicht gehindert werden.

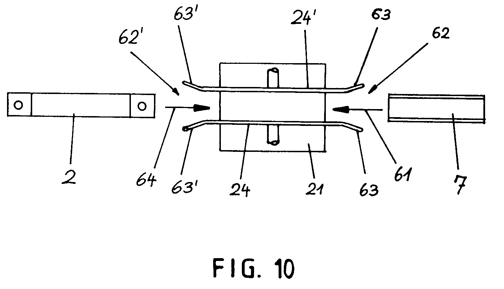

Vor allem bei einem vollautomatischen Betrieb kann es zur Erhöhung der Bearbeitungs-Stückzahl zweckmäßig sein, ein jeweiliges Elastikteil 7 nicht von oben her, sondern, wie in Fig. 10 angedeutet, in Pfeilrichtung 61 seitlich an einer Zuführseite 62 zwischen die Spreizelemente 24,24' einzuführen. Die Zuführrichtung 61 des Elastikteils 7 verläuft in diesem Fall vorzugsweise horizontal, ohne oder mit nur geringer Vertikalverlagerung. Hierbei ist es von Vorteil, wenn die Spreizelemente 24,24' im Bereich der Zuführseite 62 in voneinander entgegengesetzte Richtungen seitlich und dabei insbesondere schräg ausgestellte Führungspartien 63 aufweisen. Auf diese Weise entsteht ein verbreiterter Einfädelbereich mit sich in Zuführrichtung 61 von außen nach innen verjüngender Zwischenraum-Breite, der das Einführen der Elastikteile 7 erleichtert und eine zentrierende Wirkung hat. Auf die Führungsleisten 29 kann hierbei verzichtet werden. Die Führungspartien 63 sind insbesondere unmittelbar von den zum Beispiel schräg nach außen gebogenen Randbereichen der Spreizelemente 24,24' gebildet.

Im Anschluß an das Auflegen eines Elastikteils 7 auf die Unterlage 21 werden, erforderlichenfalls nach vorherigem Hochfahren der Spreizelemente 24,24', selbige in die Einführstellung verbracht, wonach sie bei eingenommener Einführstellung vorzugsweise gleichzeitig abgesenkt und in den Zwischenraum 30 des auf der Unterlage 21 liegenden Elastikteiles 7 eingeführt werden. Die Spreizelemente 24,24' werden so weit in Richtung der Unterlage 21 in eine Arbeitsposition bewegt, bis das Elastikteil 7 aufgrund der Konturierung der Unterlage 21 und der Spreizpartien 25 die in den Fig. 5 und 6 angedeutete Montagestellung bei einer Montagegestalt einnimmt, die der in montiertem Zustand einzunehmenden gekrümmten Gestalt zumindest im wesentlichen entspricht. Die Montagegestalt kann eventuell auch bereits vor dem Einführen der Spreizelemente 24,24' durch zusätzliche Haltemittel vorgegeben werden.

Während für die Querbewegung 26 der Spreizelemente 24,24' erste Betätigungsmittel 31 vorgesehen sind, kommen für die in Höhenrichtung erfolgende Bewegung der Spreizelemente 24,24', um selbige zwischen der Ausgangsposition gemäß Fig. 2 und der in Fig. 5 abgebildeten Arbeitsposition zu verfahren (Pfeile 36), zweite Betätigungsmittel 32 zum Einsatz, die ebenfalls später noch erläutert werden.

Nach dem Erreichen der Arbeitsposition werden die Spreizelemente mittels der ersten Betätigungsmittel 31 gemäß Bewegungspfeilen 37 der Fig. 7 in die Aufspreizstellung verbracht, wobei die Haltevorsprünge 9,9' gemäß Pfeilen 38 der Fig. 7 nach seitlich außen voneinander weg bewegt und auseinandergespreizt werden. Hierbei wird der Zwischenraum 30 zweckmäßigerweise so weit verbreitert, bis der Abstand zwischen den Spreizelementen 24,24' etwas größer ist als die Breite der Bügel 2, so daß selbige hindurch passen.

Nun wird von einer zweiten Handhabungseinrichtung 39 ein aus der Bügel-Entnahmestation 13 entnommener Bügel 2 zwischen die Spreizelemente 24,24' eingeführt und vorzugsweise von radial außen her in den verbreiterten Zwischenraum 30 des auseinandergespreizten Elastikteils 7 eingelegt, so wie dies die Pfeile 40 in Fig. 8 verdeutlichen. Die Klemmseite 6 ist dabei der Unterlage 21 zugewandt.

Das Einführen eines Bügels 2 zwischen die Spreizelemente 24,24' kann ebenfalls von oben her erfolgen. Möglich ist allerdings auch eine seitliche Zuführung vergleichbar den Elastikteilen 7, wobei die Zuführung zweckmäßigerweise von der entgegengesetzten Seite wie bei den Elastikteilen 7 erfolgt. Dies ist in Fig. 10 gezeigt, in der die Zuführrichtung durch Pfeil 64 verdeutlicht ist. Auch auf der Zuführseite 62' für die Bügel 2 sind die Spreizelemente 24,24' vorzugsweise mit Führungspartien 63' versehen, die einen Einfädelbereich bilden, vergleichbar dem für die Elastikteile 7 auf der entgegengesetzten Zuführseite 62.

Jetzt werden, gemäß Fig. 9, die Spreizelemente 24,24' von den bisher noch gehaltenen Haltevorsprüngen 9,9' entfernt, welche damit freigegeben sind und selbsttätig auf den im Zwischenraum 30 angeordneten Bügel 2 bzw. Klemmabschnitt 3 aufschnappen. Dieses Aufschnappen, bei dem die Haltevorsprünge 9,9' gemäß Pfeilen 44 der Fig. 9 in ihre ursprünglich eingenommene Lage zurückfedern und dabei die Bügelränder 8 umgreifen, wird also allein dadurch ausgelöst, daß die Spreizelemente 24,24' beim Ausführungsbeispiel aus dem Zwischenraum 30 entfernt werden.

Dieses Entfernen erfolgt zweckmäßigerweise dadurch, daß die Spreizelemente 24,24' durch über die Aufspreizstellung hinaus erfolgendes Aufspreizen seitlich gemäß Pfeilrichtung 45 aus dem Zwischenraum 30 entfernt werden, wobei die Höhenlage der Spreizelemente 24,24' bezüglich der oben erwähnten Arbeitsposition nicht verändert werden muß. Allerdings ist es durchaus möglich, hierzu die Spreizelemente auch im wesentlichen in Dickenrichtung des Elastikteiles 7, d.h. quer zur Krümmungsachse des Klemmabschnittes 3, aus dem Zwischenraum zu entfernen und damit praktisch nach oben von der Unterlage 21 wegzubewegen. Die beiden Bewegungen können sich bei Bedarf auch überlagern.

Es ist von Vorteil, wenn ein jeweiliger Bügel 2 nach dem Einlegen in den Zwischenraum 30 in Einlegerichtung 40 gegen das Elastikteil 7 gedrückt wird, damit die Gesamtanordnung fixiert bleibt. Das Andrücken findet vorzugsweise so lange statt, bis die Haltevorsprünge 9,9' die Bügelränder 8 umgreifen.

Es kann vorgesehen werden, nach dem erfolgten Aufschnappen der Haltevorsprünge 9,9' die Spreizelemente 24,24' entgegen der Pfeilrichtung 45 in Richtung zur Aufspreizstellung zurückzubewegen, und dabei von seitlich außen her gegen die Haltevorsprünge 9,9' zu drücken, so daß selbige zusätzlich auf die Bügelränder 8 aufgepresst werden. Auf jeden Fall wird dadurch ein sicherer Sitz des Elastikteils 7 auf dem Bügel 2 gewährleistet.

Gemäß einer nicht näher dargestellten Ausführungsform ist vorgesehen, daß mindestens eine Spreizpartie in bezüglich der anderen Spreizpartie entgegengesetzter Richtung seitlich ausgestellt oder ausgebogen ist, um das Aufspreizen der Haltevorsprünge 9,9' noch besser zu unterstützen. Dies ist vor allem dann von Vorteil, wenn die Haltevorsprünge 9,9' im Querschnitt gesehen gewölbt sind und an der einander zugewandten Seite eine Vertiefung aufweisen, so daß sie im Querschnitt etwa hakenförmig konturiert sind und insgesamt eine rinnenförmige Gestalt besitzen.

Nach erfolgter Montage wird der komplette Bügel 2 durch die zweite Handhabungseinrichtung 39 von der Unterlage 21 abgenommen und zur Abfördereinrichtung 20 verbracht. Nun kann sich die Montage der nächsten Bügel-Elastikteil-Einheit anschließen.

Als erste Betätigungsmittel 31 kommen beim Ausführungsbeispiel Arbeitszylinder zum Einsatz, vorzugsweise sogenannte Kurzhubzylinder, die insbesondere pneumatisch betätigt werden. Ihr Gehäuse 46 nimmt einen lediglich angedeuteten verschiebbaren Kolben 47 auf, der mit einer Kolbenstange 48 verbunden ist, welche am jeweiligen Spreizelement 24,24' festgelegt ist. Jedem Spreizelement sind solche ersten Betätigungsmittel 31 zugeordnet. Die fluidischen Zuleitungen sind der Einfachheit halber nicht dargestellt.

Als zweites Betätigungsmittel 32 kommt z.B. pro Spreizelement ein Spindeltrieb zum Einsatz, der eine in Pfeilrichtung 36 hochragende drehbare Gewindespindel 48' besitzt, die sich durch das Gehäuse 46 der ersten Betätigungsmittel 31 hindurchschraubt. Somit liegt eine kreuzschlittenartige Anordnung vor, wobei die Höhenbewegung der Spreizelemente 24,24' gemäß Doppelpfeile 36 über die Spindeltriebe und die Querbewegungen gemäß Doppelpfeile 26 über die Arbeitszylinder ausgeführt wird. Zusätzliche, z.B. säulen- oder stangenförmige Führungsmittel 49 sorgen für ein exaktes Verfahren und bilden eine Verdrehsicherung. Es versteht sich dabei, daß die Ausgestaltung der Betätigungsmittel grundsätzlich beliebig ist und eine beliebige Kombination derselben vorgenommen werden kann. Auch die zweiten Betätigungsmittel können als Arbeitszylinder ausgebildet sein.

Beim Ausführungsbeispiel dienen die ersten Betätigungsmittel 31 sowohl dazu, um die in Arbeitsposition befindlichen Spreizelemente 24,24' zwischen der Einführstellung und der Aufspreizstellung zu verfahren (Fig. 5 bis 7) als auch um sie in die Freigabestellung gemäß Fig. 9 zu verbringen und ggf. noch gegen die aufgeschnappten Haltevorsprünge 9,9' zu pressen.

Die beiden Spreizelemente 24,24' sind zweckmäßigerweise durch Führungsmittel 57 relativ zueinander in Bewegungsrichtung 26 geführt, um eine konstante Parallellage zu gewährleisten.

Zur Manipulation der Bügel 2 und Elastikteile 7 sind die Handhabungseinrichtungen 27,39 mit geeigneten Greifmitteln 50 ausgestattet, die beim Ausführungsbeispiel von Saugeinrichtungen gebildet sind. Es wird jeweils ein Saugnapf an den zu transportierenden Gegenstand angesetzt, worauf im Saugnapf ein Vakuum erzeugt wird, aufgrund dessen die Gegenstände haften bleiben. Im Falle metallischer Bügel können auch Elektromagnete vorgesehen werden.

Beim Ausführungsbeispiel sind beide Handhabungseinrichtungen 27,39 nach Art von Arbeitszylindern ausgestaltet, deren Zylindergehäuse 51 an einer z.B. schienenartigen Führungseinrichtung 52 zwischen der jeweiligen Entnahmestation 13,18 und der Montageeinrichtung 19 bewegbar geführt sind (Doppelpfeile 54). Geeignete Betätigungsmittel 53 sorgen für den Antrieb. Die Greifeinrichtungen 50 sitzen an den parallel zur Bewegungsrichtung 36 verlaufenden Kolbenstangen 55, so daß durch Betätigung der Arbeitszylinder ein Verfahren in Höhenrichtung gemäß Doppelpfeile 56 möglich ist. Die Führungseinrichtung 52 verläuft vorzugsweise oberhalb der Einrichtungen 11,14,19 und insbesondere derart, daß die Kolbenstangen 55 mit dem Zwischenraum zwischen den beiden Spreizelementen 24,24' linear fluchten. Mit einfachen Bewegungsabläufen lassen sich damit alle erforderlichen Handhabungen ausführen.

Wie eingangs erwähnt, sind die Rohrschellen 1 im Bereich einer jeweiligen Trenn- bzw. Unterteilungsstelle vorzugsweise durch Verschrauben schließbar. Die beispielsgemäße Vorrichtung verfügt deshalb zweckmäßigerweise über eine nicht näher dargestellte Verschraubeinrichtung, in der das Verschrauben maschinell im Anschluß an die Elastikteil-Montage erfolgt. Beim Ausführungsbeispiel werden die mit Elastikteilen 7 versehenen Bügel 2,2' dazu in die korrekte Relativlage gebracht, einander gegenüber fixiert, und dann verschraubt. Die Verschraubeinrichtung ist der die Unterlage 21 und die beiden Spreizelemente 24,24' enthaltenden Montageeinrichtung 19 bevorzugt nachgeschaltet.

Bevorzugt enthält die beispielsgemäße Vorrichtung mindestens zwei solche Montageeinrichtungen 19, die es im Falle von aus zwei Bügeln 2,2' bestehenden Rohrschellen 1 ermöglichen, die entsprechenden Bügelpaare jeweils parallel und insbesondere gleichzeitig mit Elastikteilen 7 zu versehen (nicht dargestellt). Anschließend können die Bügelpaare in einer nachgeschalteten Verschraubeinrichtung zusammengeführt und zusammengeschraubt werden.

Jeder solchen Montageeinrichtung 19 ist ferner zweckmäßigerweise eine Zuschneideeinrichtung vorgeschaltet, in der von band- oder strangförmig vorliegendem, insbesondere spulenartig aufgewikkeltem Elastikmaterial die einzelnen Elastikteile 7 sukzessive mit der gewünschten Länge abgeschnitten werden. Für den Vorschub des Elastikmaterials kann beispielsweise ein sogenanntes Bandvorschubgerät eingesetzt werden. Die abgelängten Elastikteile 7 werden anschließend der jeweiligen Montageeinrichtung 19 zugeführt.

Die gesamte Steuerung der erfindungsgemäßen Vorrichtung erfolgt vorzugsweise elektrisch und/oder elektronisch. Die Aktoren werden dabei zweckmäßigerweise zumindest teilweise pneumatisch betätigt und von elektrisch und/oder elektronisch angesteuerten Pneumatikventilen beeinflußt.

**Patentansprüche**

1. Verfahren zur Montage eines leistenförmigen, insbesondere aus Gummi bestehenden Elastikteils (7) an der Klemmseite (6) des Bügels (2,2') einer Rohrschelle (1), wobei das Elastikteil (7) zwei einander gegenüber beabstandete, in montiertem Zustand den Bügel (2,2') über eine Haltelänge randseitig umgreifende Haltevorsprünge (9,9') besitzt, dadurch gekennzeichnet, daß das Elastikteil (7) in eine zumindest annähernd der im montierten Zustand einzunehmenden Gestalt entsprechende gekrümmte Montagegestalt gebracht wird, daß anschließend die bei dieser Montagegestalt nach radial außen ragenden Haltevorsprünge (9,9') mittels zweier Spreizelemente (24,24') auseinandergespreizt werden, daß danach der Bügel (2,2') mit der Klemmseite (6) voraus in den durch das Aufspreizen verbreiterten Zwischenraum (30) zwischen den über ihre gesamte Haltelänge auseinandergespreizten Haltevorsprüngen (9,9') eingelegt wird, und daß schließlich die Haltevorsprünge (9,9') von den Spreizelementen (24,24') freigegeben werden, worauf selbige auf die Bügelränder (8) aufschnappen können.

2. Verfahren nach Anspruch 1, dadurch gekennzeichnet, daß die Spreizelemente (24,24') zum Auseinanderspreizen der Haltevorsprünge (9,9') in den zwischen diesen befindlichen Zwischenraum (30) eingeführt und anschließend in eine Aufspreizstellung auseinanderbewegt werden.

3. Verfahren nach Anspruch 2, dadurch gekennzeichnet, daß die Spreizelemente (24,24') zum Freigeben der Haltevorsprünge (9,9') aus dem Zwischenraum (30) entfernt werden, zweckmäßigerweise indem sie durch über die Aufspreizstellung hinaus erfolgendes Aufspreizen seitlich aus dem Zwischenraum (30) herausbewegt werden.

4. Verfahren nach Anspruch 2 oder 3, dadurch gekennzeichnet, daß die Spreizelemente (24,24') zum Enfernen aus dem Zwischenraum (30) im wesentlichen in Dickenrichtung des Elastikteiles (7) bzw. quer zur Krümmungsachse der Montagegestalt bewegt werden.

5. Verfahren nach einem der Ansprüche 1 bis 4, dadurch gekennzeichnet, daß das jeweilige Elastikteil (7) zur Gewährleistung der Montagegestalt, insbesondere von den Spreizelementen (24,24'), zumindest vorübergehend gegen eine gestaltgebende Unterlage (21) gedrückt wird.

6. Verfahren nach einem der Ansprüche 1 bis 5, dadurch gekennzeichnet, daß der in den Zwischenraum (30) eingelegte Bügel (2,2') gegen das Elastikteil (7) gedrückt wird, und zwar insbesondere so lange, bis die Haltevorsprünge (9,9') auf die Bügelränder (8) aufgeschnappt sind.

7. Verfahren nach einem der Ansprüche 1 bis 6, dadurch gekennzeichnet, daß man nach dem Entfernen der Spreizelemente (24,24'), insbesondere unter Vermittlung der Spreizelemente (24,24'), von seitlich außen gegen die Haltevorsprünge (9,9') drückt.

8. Vorrichtung zur Montage eines leistenförmigen, insbesondere aus Gummi bestehenden Elastikteiles (7) an der Klemmseite (6) des Bügels (2,2') einer Rohrschelle (1), wobei das Elastikteil (7) zwei einander gegenüber beabstandete, im montierten Zustand den Bügel (2,2') über eine Haltelänge randseitig umgreifende Haltevorsprünge (9,9') besitzt, insbesondere zur Durchführung des Verfahrens nach einem der Ansprüche 1 bis 7, dadurch gekennzeichnet, daß eine Unterlage (21) vorhanden ist, an der das Elastikteil (7) in einer Montagestellung derart anordenbar ist, daß es eine zumindest annähernd der im montierten Zustand einzunehmenden Gestalt entsprechende gekrümmte Montagegestalt mit nach radial außen ragenden Haltevorsprüngen (9,9') einnimmt, daß zwei zwischen einer einander angenäherten Einführstellung und einer weiter voneinander entfernten Aufspreizstellung bewegbare Spreizelemente (24,24') vorhanden sind, und daß Betätigungsmittel (31,32) vorhanden sind, um die Spreizelemente (24,24') bei eingenommener Einführstellung in den Zwischenraum (30) zwischen den Haltevorsprüngen (9,9') eines jeweiligen an der Unterlage angeordneten Elastikteils (7) einzuführen, anschließend unter Auseinanderspreizung der Haltevorsprünge (9,9') des Montagegestalt aufweisenden Elastikteils (7) in die Aufspreizstellung zu verbringen und danach, bei mit der Klemmseite (6) voraus in den verbreiterten Zwischenraum (30) eingelegtem Bügel (2,2'), von den Haltevorsprüngen (9,9') zu entfernen.

9. Vorrichtung nach Anspruch 8, dadurch gekennzeichnet, daß jedes Spreizelement (24,24') an der zum Einführen in den Zwischenraum (30) der Haltevorsprünge (9,9') bestimmten Seite eine ensprechend der Krümmung des in Montagestellung befindlichen Elastikteiles (7) konturierte Spreizpartie (25) aufweist, wobei mindestens eine Spreizpartie (25) zweckmäßigerweise in bezüglich der anderen Spreizpartie (25) entgegengesetzter Richtung seitlich ausgestellt oder ausgebogen ist.

10. Vorrichtung nach Anspruch 8 oder 9, dadurch gekennzeichnet, daß die Spreizelemente (24,24') plattenförmig ausgebildet sind, wobei die gegebenenfalls vorhandenen Spreizpartien (25) zweckmäßigerweise von Plattenrändern gebildet sind.

11. Vorrichtung nach einem der Ansprüche 8 bis 10, dadurch gekennzeichnet, daß eine Führungseinrichtung (28) zur Positionierung des jeweiligens Elastikteils (7) und/oder Bügels (2,2') bezüglich der Unterlage (21) vorhanden ist.

12. Vorrichtung nach Anspruch 11, dadurch gekennzeichnet, daß eine Führungseinrichtung (28) an mindestens einem der Spreizelemente (24,24') vorgesehen und zweckmäßigerweise von einer randseitigen, seitwärts ausgestellten Führungspartie (63,63') eines Spreizelementes (24,24') gebildet ist, so daß ein verbreiterter Einfädelbereich für zuzuführende Elastikteile (7) und/oder Bügel (2,2') vorliegt.

13. Vorrichtung nach einem der Ansprüche 8 bis 12, dadurch gekennzeichnet, daß die Spreizelemente (24,24') in einer Ausgangsposition gegenüber der Unterlage (21) und dabei insbesondere oberhalb der Unterlage (21) angeordnet sind.

14. Vorrichtung nach einem der Ansprüche 8 bis 13, dadurch gekennzeichnet, daß Betätigungsmittel (31) vorhanden sind, um die in den Zwischenraum (30) eingeführten Spreizelemente (24,24') zwischen der Einführstellung und der Aufspreizstellung sowie zwischen der Aufspreizstellung und einer noch weiter voneinander entfernten, die Haltevorsprünge (9,9') freigebenden Freigabestellung zu verfahren.

15. Vorrichtung nach einem der Ansprüche 8 bis 14, dadurch gekennzeichnet, daß sie mindestens zwei jeweils eine Unterlage (21), Spreizelemente (24,24') und zugehörige Betätigungsmittel (31,32) umfassende Montageeinrichtungen (19) aufweist.

16. Vorrichtung nach einem der Ansprüche 8 bis 15, dadurch gekennzeichnet, daß mindestens eine Zuschneidevorrichtung zum Zuschneiden von Elastikteilen (7) aus einem Materialband oder -strang und/oder mindestens eine Verschraubeinrichtung zum Verschrauben von mit Elastikteilen (7) versehenen Bügeln (2,2') vorhanden ist.

FIG. 1

FIG. 3

FIG. 4

FIG. 5

FIG. 6

FIG. 7

FIG. 8

FIG. 9

FIG. 2

EP 0 508 197 A2

FIG. 10